# FASCICULE DE BREVET EUROPEEN

(11) **EP 1 188 626 B1**
(45) Date de publication et mention de la délivrance du brevet: **10.08.2005**
(21) Numéro de dépôt: 01121982.1
(22) Date de dépôt: 13.09.2001
(51) Int. Cl.: B60R 25/00

(54) **Véhicule automobile équipé d'un système "mains libres" ayant une antenne récéptrice positionnée en haut de colonne de direction**
Kraftfahrzeug ausgerüstet mit einem handfreien Zugangssystem, mit einer auf einer Lenksäuleneinheit montierten Empfangsantenne
Motor vehicle equipped with an hands-free access system, with a receiving antenna placed on a steering column assembly

(30) Priorité: 18.09.2000 FR 0011867
(43) Date de publication de la demande: 20.03.2002
(73) Titulaire: VALEO SECURITE HABITACLE S.A.S., 94042 Créteil Cédex (FR)
(72) Inventeur: Baudard, Xavier, 75016 Paris (FR)
(74) Mandataire: Rosolen-Delarue, Katell

(56) Documents cités:
- WO-A-99/29543
- US-A- 5 689 142

## Description

L'invention concerne un véhicule automobile équipé d'un système de contrôle d'accès et/ou de démarrage, dit "mains libres", ayant une antenne réceptrice positionnée en haut de la colonne de direction que comporte le véhicule.

Un véhicule selon la préambule de la revendication 1 est généralement connu de l'état de la technique.

Il est connu d'équiper un véhicule automobile d'un système "mains libres" qui permet à un utilisateur porteur d'un identifiant d'agir sur des organes du véhicule, par exemple sur les serrures des ouvrants ou sur le démarreur du moteur, du simple fait de son entrée dans une zone limitée définie par rapport au véhicule, si l'identifiant qu'il porte est reconnu par des moyens de contrôle qui équipent le véhicule. L'identifiant est constitué, de manière habituelle, par un transpondeur qui réagit aux émissions, produites au niveau du véhicule pour détecter sa présence, en émettant des signaux radio de réponse. Une antenne réceptrice située à bord du véhicule et par exemple en haut de la colonne de direction du véhicule, est prévue pour capter ces signaux de réponse. Elle est raccordée à un sous-ensemble récepteur radio qui convertit les signaux captés par l'antenne, sous une forme acceptable par un sous-ensemble logique de gestion qui assure les fonctions de contrôle. Ce sous-ensemble logique de gestion vérifie si les signaux reçus correspondent ou non à une combinaison prédéterminée, caractéristique d'un identifiant spécifique, afin d'autoriser ou de déclencher au moins une action prédéterminée au niveau du véhicule, si la correspondance est établie, l'identifiant émetteur étant alors considéré comme reconnu.

Dans les réalisations connues, le sous-ensemble logique de gestion est situé à distance du sous-ensemble récepteur radio et de l'antenne réceptrice, en particulier lorsque cette antenne est située en haut de colonne de direction comme indiqué ci-dessus. Ceci n'est pas optimal en matière de coût et sur le plan de l'efficacité, en particulier en ce qui concerne les délais de transmission des signaux reçus, alors qu'une grande rapidité de réponse aux signaux reçus est recherchée.

Par ailleurs, comme il est connu, il existe souvent de nombreuses liaisons filaires le long d'au moins une partie d'une colonne de direction de véhicule automobile, depuis le haut de colonne et vers le reste du véhicule, pour les divers organes électriques de commande et/ou de signalisation qui sont couramment montés sur la colonne de direction, sur le volant et/ou sur un ou des modules satellites spécialisés qu'elle supporte.

L'invention a donc pour objet un véhicule automobile, équipé d'un système d'accès et/ou de démarrage "mains libres" qui est contrôlé par un sous-ensemble logique de gestion et qui dispose d'un sous-ensemble récepteur radio, doté d'une antenne réceptrice positionnée en haut de la colonne de direction que comporte le véhicule, de manière à convertir les signaux radio reçus par l'antenne en signaux exploitables par le sous-ensemble logique de gestion pour permettre à ce dernier d'autoriser ou de déclencher une opération au niveau du véhicule, lorsque les signaux reçus sont reconnus comme provenant d'un identifiant d'utilisateur prédéterminé.

Selon une caractéristique de l'invention, ce véhicule comporte une carte électronique située en haut de colonne de direction qui porte l'antenne et qui regroupe le sous-ensemble de gestion du système "mains libres" et le sous-ensemble récepteur radio, qu'elle interconnecte.

Ceci permet en particulier d'accroître la vitesse de traitement des opérations de reconnaissance d'identifiant et donc de réduire le temps nécessaire au déclenchement d'une action par le système "mains libres", lorsqu'un identifiant est reconnu.

Selon une caractéristique de l'invention, la carte électronique, située en haut de colonne de direction, regroupe le sous-ensemble de gestion du système "mains libres", le sous-ensemble récepteur radio et un sous-ensemble d'interface prévu pour des organes de commande et/ou de signalisation, dits de haut de colonne, qui sont montés sur la colonne de direction, sur le volant du véhicule et/ou sur un ou des modules satellites que porte cette colonne de direction.

Selon une variante de l'invention, le sous-ensemble d'interface est placé sous le contrôle du sous-ensemble logique de gestion, auquel il est relié par l'intermédiaire de la carte électronique.

Ceci permet d'exploiter les possibilités de traitement offertes par le sous-ensemble logique de gestion pour des traitements autres que ceux qui sont directement liés au système "mains libres", à partir du moment où ce dernier permet au sous-ensemble logique de gestion de travailler de manière partagée.

Selon une variante de l'invention, la carte électronique, située en haut de colonne de direction, est reliée à une liaison numérique de transmission de données, de type bus série, qui est partagée pour leurs communications par différents sous-ensembles et/ou organes, émetteurs et/ou récepteurs de données, équipant le véhicule, et qui est exploitée à cette même fin par au moins un des sous-ensembles de la carte et/ou par des organes de commande et de signalisation de haut de colonne reliés à au moins l'un de ces sous-ensembles.

L'invention, ses caractéristiques et ses avantages sont précisés dans la description qui suit en liaison avec les figures évoquées ci-dessous.
La figure 1 présente un schéma de principe d'un véhicule automobile, ,vu de dessus, qui est équipé d'un système "mains libres" exploitant une antenne réceptrice positionnée en haut de la colonne de direction du véhicule, selon l'art connu.
La figure 2 présente un schéma, simplifié, relatif à un véhicule automobile équipé selon l'invention.

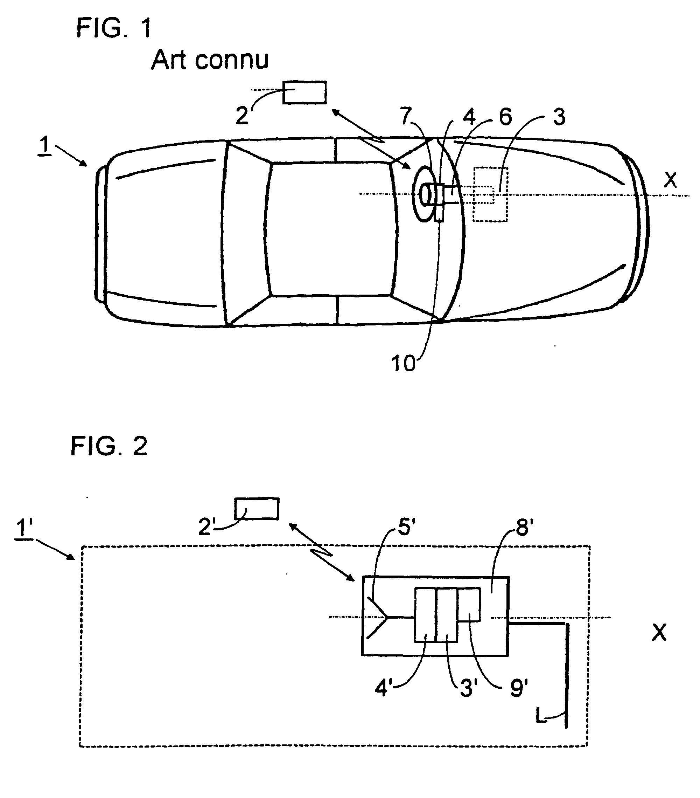

Le véhicule automobile 1, schématisé sur la figure 1, est supposé équipé d'un système d'accès et/ou de démarrage "mains libres" qui permet à un utilisateur disposant d'un identifiant 2, d'agir sur au moins un organe du véhicule, du simple fait de son entrée dans une zone de portée radio limitée qui est définie par rapport au véhicule. Cette action concerne par exemple les serrures des ouvrants du véhicule ou le démarreur du moteur.

Comme il est connu, l'identifiant 2 est le plus souvent de type transpondeur, et il réagit aux émissions qui sont produites au niveau du véhicule pour détecter sa présence, en émettant des signaux radio de réponse.

Le système "mains libres" comporte un sous-ensemble logique de gestion 3, disposé à bord du véhicule, qui est par exemple organisé, de manière connue en soi, autour d'un processeur et d'au moins une mémoire programmée, non représentés. Il comporte aussi un sous-ensemble récepteur radio 4 muni d'une antenne réceptrice 5. Ce sous-ensemble récepteur radio et cette antenne sont ici supposés montés en haut de la colonne de direction 6, qui porte le volant 7 permettant de faire tourner le véhicule.

La colonne de direction 6 est supposée orientée selon un axe X au moins dans un tronçon situé à sa partie supérieure. Elle porte souvent une carte d'interface à laquelle sont électriquement reliés des organes de commande, par exemple des commutateurs, de type basculeur ou bouton poussoir, et des organes de signalisation, notamment de type voyant lumineux, qui sont reliés à des organes appartenant à des sous-ensembles logés à l'intérieur du véhicule, par des fils conducteurs. Ces fils courent le long de la colonne 6, sur au moins une partie de leur trajet, d'une manière connue qui n'est pas illustrée sur la figure 1.

Selon l'invention et comme schématisé sur la figure 2, il est prévu de monter une carte électronique 8' en haut de la colonne de direction d'un véhicule 1' qui est ici symbolisée par son axe X. Cette carte est prévue pour permettre de regrouper l'antenne réceptrice 5', le sous-ensemble récepteur radio 4' et le sous-ensemble de gestion 3' du système "mains libres" du véhicule. 1'.

La carte électronique 8' est supposée comporter des pistes conductrices de liaison entre les composants des sous-ensembles qu'elle porte ou comporte pour permettre d'interconnecter ces sous-ensembles de manière déterminée. Le regroupement réalisé réduit les distances entre composants du système "mains libres" qui sont impliqués dans la prise en compte des signaux d'identification provenant d'un identifiant 2' d'utilisateur. Des délais de transmission courts sont ainsi obtenus pour les signaux d'identification qui sont transmis au sous-ensemble logique de gestion 3', après avoir été captés par l'antenne réceptrice 5' et convertis par le sous-ensemble récepteur radio 4' sous une forme exploitable par ledit sous-ensemble logique de gestion.

Il est aussi prévu de disposer, sur la carte électronique 8', un sous-ensemble 9' d'interface pour des organes de commande et/ou de signalisation, ici dits de haut de colonne, qui sont montés sur la colonne de direction, sur le volant du véhicule et/ou sur un ou des modules satellites 10 que porte cette colonne de direction. Ces différents montages, ne sont pas illustrés ici, dans la mesure où ils sont bien connus de l'homme de métier.

La présence du sous-ensemble logique de gestion 3' peut être mise à profit pour assurer le contrôle du sous-ensemble d'interface 9' et d'au moins certains des organes reliés à lui, en assurant éventuellement un prétraitement des signaux que ces organes envoient ou qui leur sont transmis.

Dans une forme préférée de réalisation, la carte électronique 8', située en haut de colonne de direction, est reliée à une liaison numérique L, bidirectionnelle, de type bus série, qui est partagée par différents sous-ensembles et organes, émetteurs et/ou récepteurs, équipant le véhicule. La liaison L se substitue au faisceau de fils électriques qui autrement longe la colonne de direction pour joindre des organes disséminés dans le véhicule aux organes de commande et/ou de signalisation, dits de haut de colonne. Elle est exploitée aux fins de communication indiquées ci-dessus par au moins un sous-ensemble que comporte la carte, et par exemple par le sous-ensemble logique de gestion 3' et par le sous-ensemble d'interface 8', dans la réalisation ici prévue. Elle peut aussi être directement exploitée aux mêmes fins par un ou des organes de commande et/ou de signalisation de haut de colonne, si besoin est.

## Revendications

1. Véhicule automobile, équipé d'un système d'accès et/ou de démarrage "mains libres" qui est contrôlé par un sous-ensemble logique de gestion (3') et qui dispose d'un sous-ensemble récepteur radio (4'), doté d'une antenne réceptrice (5') positionnée en haut de la colonne de direction que comporte le véhicule, de manière à convertir les signaux radio reçus par l'antenne en signaux exploitables par le sous-ensemble logique de gestion dans le but de permettre à celui-ci d'autoriser ou de déclencher une opération au niveau du véhicule, lorsque ces signaux sont reconnus comme provenant d'un identifiant (2') d'utilisateur prédéterminé, l'antenne, le sous-ensemble de gestion du système "mains libres" et le sous-ensemble récepteur radio étant regroupés sur une carte électronique (8') et interconnectés par cette carte, **caractérisé en ce que** ladite carte électronique (8') porte également un sous-ensemble d'interface (9') prévu pour des organes de commande et/ou de signalisation dits de haut de colonne, qui sont montés sur la colonne de direction, sur le volant du véhicule et/ou sur un ou des modules satellites que porte cette colonne de direction.

2. Véhicule automobile, selon la revendication 1, dans lequel le sous-ensemble d'interface (9') est placé sous le contrôle du sous-ensemble logique de gestion (3') auquel il est relié par l'intermédiaire de la carte électronique (8').

3. Véhicule automobile, selon l'une la revendication 1 ou 2, dans lequel la carte électronique (8'), située en haut de colonne de direction, est reliée à une liaison numérique de transmission de données (L), de type bus série, qui est partagée pour leurs communications par différents sous-ensembles et organes émetteurs et/ou récepteurs de données équipant le véhicule, et qui est exploitée à cette même fin par au moins un des sous-ensembles de la carte et/ou par les organes de commande et de signalisation de haut de colonne reliés à eux.

## Patentansprüche

1. Kraftfahrzeug, ausgestattet mit einem Freihandzugangs- und/oder Startsystem, das über eine logische Leituntereinheit (3') gesteuert wird und über eine Funkempfangsuntereinheit (4') verfügt, die mit einer Empfangsantenne (5') versehen ist, welche im oberen Bereich der im Fahrzeug enthaltenen Lenksäule positioniert ist, so dass über die Antenne empfangene Funksignale in von der logischen Leituntereinheit verwertbare Signale umgewandelt werden, um es dieser zu ermöglichen, einen Vorgang am Fahrzeug dann zu gestatten bzw. auszulösen, wenn diese Signale als von einem vorbestimmten Identifizierer (2') des Benutzers stammend erkannt werden, wobei die Antenne, die Leituntereinheit des Freihandsystems und die Funkempfangsuntereinheit auf einer elektronischen Karte (8') zusammengefasst und über diese Karte miteinander verbunden sind, **dadurch gekennzeichnet, dass** die genannte elektronische Karte (8') auch eine Schnittstellenuntereinheit (9') trägt, die für sogenannte Steuer- und/oder Meldeorgane des oberen Lenksäulenbereichs vorgesehen sind, die an der Lenksäule, am Lenkrad des Fahrzeugs und/oder an einem oder mehreren Satellitenmodulen montiert sind, welche diese Lenksäule trägt.

2. Kraftfahrzeug nach Anspruch 1, wobei die Schnittstellenuntereinheit (9') unter der Kontrolle der logischen Leituntereinheit (3') steht, mit der sie über die elektronische Karte (8') verbunden ist.

3. Kraftfahrzeug nach Anspruch 1 oder 2, wobei die im oberen Bereich der Lenksäule befindliche elektronische Karte (8') mit einer digitalen Datenübertragungsverbindung (L) vom Typ serieller Bus verbunden ist, die zu deren Datenkommunikation über verschiedene Untereinheiten und Datensende- und/oder Empfangsorgane aufgeteilt ist, mit welchen das Fahrzeug ausgestattet ist, und die auch zu diesem Zweck über zumindest eine der Untereinheiten der Karte und/oder über die mit diesen verbundenen Steuer- und Meldeorgane des oberen Lenksäulenbereichs verwertbar ist.

## Claims

1. Automobile vehicle equipped with a "hands-free" access and/or starting system controlled by a management logic subassembly (3') and including a radio receiver subassembly (4') equipped with a receiving antenna (5') mounted on the vehicle steering column and serving to convert radio signals received by the antenna into signals exploitable by said management logic subassembly in order to allow it to authorize or initiate an operation on the vehicle when such signals are recognized as coming from a predetermined user identifier (2'), said antenna, said management subassembly of said "hands-free" system, and said radio receiver subassembly being grouped on an electronic card (8') and interconnected by this card, wherein said electronic card (8') also includes an interface subassembly (9') for so-called column-mourited control and/or signaling systems that are mounted on the vehicle steering column or steering wheel and/or on one or more column-mounted satellite modules.

2. Automobile vehicle, according to claim 1, in which said interface subassembly (9') is controlled by said management logic subassembly (3') to which it is connected via said electronic card (8').

3. Automobile vehicle, according to claim 1 or 2, in which said electronic card (8'), mounted on the steering column, is connected to a serial bus type digital data transmission link (L) that is shared for their communications by different vehicle subassemblies and systems sending and/or receiving data, and that is exploited for this purpose by at least one of the subassemblies of said card and/or by the steering column-mounted control and signaling systems connected to them.
